(19)

**Europäisches Patentamt**
**European Patent Office**
**Office européen des brevets**

(11) **EP 4 737 850 A1**

(12) **EUROPEAN PATENT APPLICATION**

(43) Date of publication:
06.05.2026 Bulletin 2026/19

(21) Application number: 25209085.7

(22) Date of filing: 16.10.2025

(51) International Patent Classification (IPC):
**G01C 19/5755** $^{(2012.01)}$ **G01C 25/00** $^{(2006.01)}$

(52) Cooperative Patent Classification (CPC):
**G01C 25/005; G01C 19/5755**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 31.10.2024 IT 202400024543

(71) Applicant: STMicroelectronics International N.V.
1228 Plan-les-Ouates, Geneva (CH)

(72) Inventors:
• **GUERINONI, Luca**
20864 AGRATE BRIANZA (MB) (IT)
• **BERNABUCCI, Davide**
20864 AGRATE BRIANZA (MB) (IT)
• **YALLICO SANCHEZ, Gianfranco Javier**
20864 AGRATE BRIANZA (MB) (IT)
• **QUARTIROLI, Matteo**
20864 AGRATE BRIANZA (MB) (IT)

(74) Representative: **Studio Torta S.p.A.**
Via Viotti, 9
10121 Torino (IT)

(54) **SCALE FACTOR CALIBRATION METHOD FOR MICROELECTROMECHANICAL GYROSCOPES**

(57) A calibration method (100) of a gyroscope (11) that is microelectromechanical, including a movable mass (12), a movable sensing electrode (13) of the movable mass (12), a fixed sensing electrode (17) capacitively coupled to the movable sensing electrode (13) and a bias terminal (19) of the movable mass (12) includes: applying, to the bias terminal (19), a sequence of forcing signals ($S_F$) having a forcing time ($T_F$) and being determined by signals that are variable over time superimposed on respective forcing bias voltages ($V_D$) selected in a range; acquiring a sequence of sense signals ($V_S$) indicative of a damped oscillation of the movable mass (12) along a sense direction (Y) caused by respective forcing signals ($S_F$) consecutively to respective forcing times ($T_F$); from the sense signals ($V_S$), estimating a sequence of respective natural sense frequencies ($f_S$), each dependent on the corresponding forcing bias voltage ($V_D$); and estimating a sense gap ($g$), indicative of a distance at rest between the movable sensing electrode (13) and the fixed sensing electrode (17), starting from the sequence of natural sense frequencies ($f_S$).

FIG. 2

EP 4 737 850 A1

**Description**

Technical Field

The present invention relates to a scale factor calibration method for microelectromechanical gyroscopes, and in particular to an estimation method of the variation of the scale factor and a correction method thereof.

Background

As is known, microelectromechanical (MEMS) inertial sensors, such as for example MEMS gyroscopes, generally comprise a support body and at least one movable mass, suspended on and coupled to the support body through flexures. The flexures are configured so as to allow the movable mass to oscillate with respect to the support body according to one or more degrees of freedom. The movable mass is coupled to the support body generally in a capacitive manner and forms, with the support body, capacitors of variable capacitance. In particular, the movement of the movable mass with respect to fixed electrodes on the support body, due to the action of forces acting thereon, modifies the capacitance of these capacitors; the displacement of the movable mass with respect to the support body is sensed by this capacitive variation and the external force that caused the displacement is calculated starting from the sensed displacement.

Among MEMS inertial sensors, gyroscopes have a complex electromechanical structure that may comprise, for example, at least two movable masses, each having one or at most two degrees of freedom with respect to the support body, or a single movable mass provided with at least two degrees of freedom. In all cases, capacitive coupling occurs through fixed and movable actuation (or driving) electrodes and through fixed and movable sensing electrodes.

In the implementation with a single movable mass, for example, the movable mass is coupled to the support body so as to be movable with respect to the latter with two independent degrees of freedom, and precisely one degree of freedom for actuation and one degree of freedom for sensing. The latter may envisage a movement along the plane of the movable mass ("in-plane" movement) or perpendicular to the plane ("out-of-plane" movement). An actuation or driving device maintains the movable mass in controlled oscillation according to the degree of freedom for actuation. The movable mass moves based on the degree of freedom for sensing in response to the rotation of the support body, due to the Coriolis force.

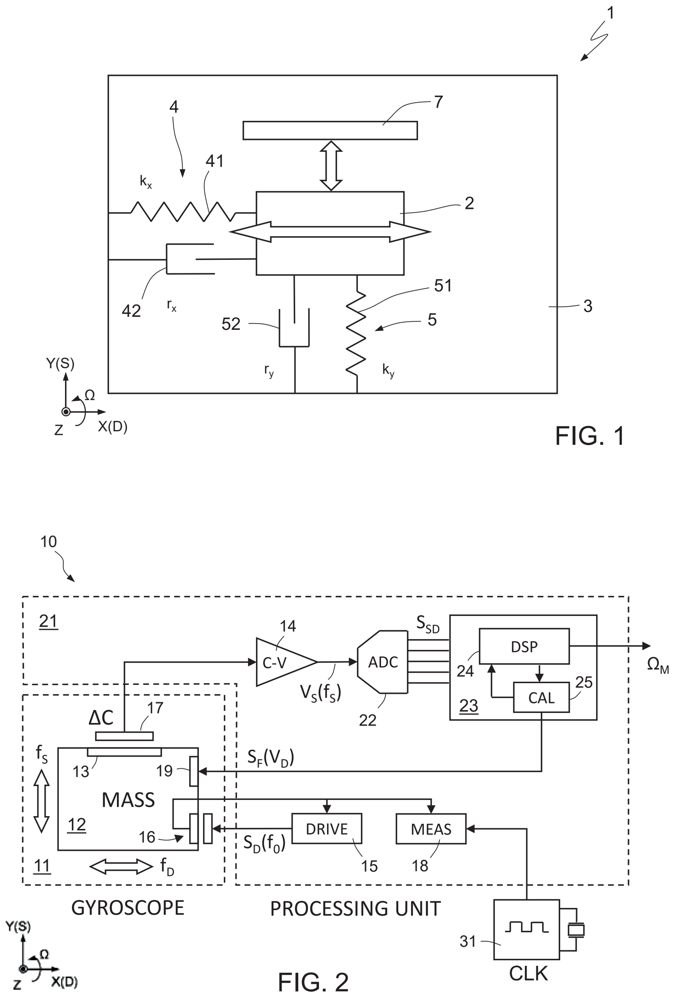

A principle diagram of a single movable mass gyroscope is shown in Figure 1, showing in broad terms the mechanical sense structure of a gyroscope 1. Here, the gyroscope 1 comprises a movable mass 2 supported by a support structure 3 (shown schematically) through a first and a second flexure system 4, 5, also shown only schematically and each represented through a respective elastic element 41, 51 (having respective elastic constants $k_x$ and $k_y$) and a respective damping element 42 and 52 (having respective damping constants $r_x$ and $r_y$).

In Figure 1, the first flexure system 4 allows the movement of the movable mass 2 in a first direction, parallel to a first axis of a Cartesian reference system (here the X axis) and therefore referred to as the drive direction X, and the second flexure system 5 allows the movement of the movable mass 2 in a second direction, parallel to a second axis of the Cartesian reference system (here the Y axis) and therefore referred to as the sense direction Y.

In Figure 1, driving electrodes not shown cause the oscillation of the movable mass 2 in the drive direction X. In the presence of a rotary movement $\Omega$ of the gyroscope 1 around an axis parallel to the Z axis (which is therefore a rotation direction Z), the Coriolis force causes an oscillatory movement of the movable mass 2 in the sense direction Y, in a known manner. This movement determines a variation in the distance, or "gap", between the movable mass 2 (or a movable electrode integral thereto in the sense direction Y) and a fixed electrode 7 of the gyroscope 1 and may be sensed on the basis of the resulting capacitive variation $\Delta C$.

As indicated, real MEMS gyroscopes have a complex structure and often have non-ideal electromechanical interactions between the movable mass and the support body, for example due to manufacturing defects, environmental conditions (temperature and humidity) and/or assembly in packaging (thermomechanical stresses) and aging that modify the gyroscope scale factor, i.e. the ratio between the gyroscope output signal (capacitive variation $\Delta C$) and the angular velocity $\Omega$ to be sensed.

In fact, such conditions may give rise to a disturbance that acts in the sense direction Y, increasing or decreasing the elongation of the movable mass 2 caused by the Coriolis force in the sense direction Y and/or varying the distance between the movable mass 2 and the fixed electrode 7 and therefore giving rise to different capacitive variations between the same movable mass and the fixed electrode, causing a variation of the scale factor. This fact may also be demonstrated mathematically starting from the definition of the scale factor S of a gyroscope of the type shown in Figure 1:

$$S = \frac{\Delta C}{\Omega} = \frac{1}{\Omega}\left[\frac{dC}{dy} * y\right] = \frac{1}{\Omega}\left[\frac{\varepsilon_0 A}{g^2(\bar{d})} * H(\bar{d}) * F_C\right] \qquad (1)$$

wherein y is the sense displacement, $\varepsilon_0$ is the dielectric constant in vacuum, *A* is the facing area between the fixed electrode 7 and the movable mass 2, $\overline{d}$ is the amplitude of the external disturbance, $g(\overline{d})$ is the gap as a function of the external disturbance, $H(\overline{d})$ is the transfer function of the gyroscope and $F_C$ is the Coriolis force due to the angular velocity $\Omega$. From (1) it is clearly seen that the scale factor depends to a non-negligible extent on external disturbances.

In addition to the gap between electrodes in the sense direction, external disturbances may also influence a further mechanical contribution of the scale factor, i.e. the so-called "frequency mismatch", understood as the difference in the natural oscillation frequency of the movable mass along the sense direction (in Figure 1, the natural frequency of the second flexure system 5) with respect to the natural oscillation frequency along the drive direction (in Figure 1, the natural frequency of the first flexure system 4).

The stability of the scale factor during the average life is an important parameter for gyroscopes as it directly influences their reading reliability.

Solutions that attempt to compensate for known disturbances by means of trimming techniques are widespread. For example, in case of a variation of the scale factor due to variations in external temperature, which causes for example the modification of the stiffness of the suspension elastic structures, the external temperature may be measured and, on the basis of a known and/or measured behavioral model in the final test step, the measurement carried out may be corrected so as to eliminate the error. However, when the external disturbance cannot be measured (for example because it is due to the solder process to the mounting board), especially if it is variable over time (as in the case of modification of the elastic parameters caused by the aging of the materials or other degenerative phenomena), the problem is more difficult to solve.

Self-calibration techniques of the scale factor during the average life of the gyroscope may be more advantageous than trimming techniques; however, such approaches are based only on estimates of the scale factor, without an actual evaluation of the mechanical contributions that cause the variation thereof, and the resulting corrections may not be satisfactory.

Summary

It is therefore an aim of the present invention to overcome or at least partly mitigate the disadvantages and limitations of the state of the art.

According to the present invention, a scale factor calibration method for microelectromechanical gyroscopes and a system for sensing angular velocity are provided, as defined in the attached claims.

Brief Description of the Figures

For a better understanding of the present invention, preferred embodiments are presented, by way of non-limiting example, with reference to the attached drawings, wherein:

- Figure 1 shows a principle diagram of a known MEMS gyroscope;
- Figure 2 is a simplified block diagram of an angular velocity sense system in accordance with one embodiment of the present invention;
- Figure 3 is a simplified block diagram of a detail of the angular velocity sense system of Figure 2;
- Figure 4 is a flow chart of the scale factor calibration method of the gyroscope of the angular velocity sense system of Figure 2 in accordance with one embodiment of the present invention;
- Figure 5 is a simplified block diagram of a detail of Figure 3; and
- Figure 6 schematically shows an electrostatic softening curve obtained using the scale factor calibration method of Figure 4.

Description of Embodiments

The following description refers to the arrangement shown in the drawings; accordingly, expressions such as "above," "below," "upper, " "lower," "top," "bottom," "right," "left," and the like relate to the accompanying Figures and are not to be interpreted in a limiting manner.

Figure 2 shows an angular velocity sense system according to one embodiment of the present invention, indicated as a whole by the numeral 10 and comprising a gyroscope 11 and an electronic processing unit 21.

The gyroscope 11 comprises a movable mass 12 (e.g., without being considered limiting, a single movable mass) configured to be movable according to two independent degrees of freedom, a degree of freedom for actuation and a degree of freedom for sensing, both for example "in plane." A flexure system similar to the first flexure system 4 of Figure 1 (and not shown here) allows the movable mass 12 to be maintained in controlled oscillation according to the degree of freedom for actuation along the drive direction X. A flexure system similar to the first flexure system 5 of Figure 1 (and not shown here) allows the movable mass 12 to oscillate according to the degree of freedom for sensing, along the sense direction Y, in response to a rotary movement $\Omega$ of the gyroscope 11 around the rotation direction Z due to the Coriolis force.

In particular, the movable mass 12 comprises a movable sensing electrode 13 capacitively coupled to a fixed sensing electrode 17 of the gyroscope 11. The movable sensing electrode 13 is separated from the fixed sensing electrode 17 by a distance at rest hereinafter referred to as sense gap g. The fixed sensing electrode 17 is set to a value of sense bias voltage $V_{BS}$. Furthermore, the movable mass 12 is provided with a bias terminal 19, generally used to set a bias voltage of the movable mass 12 and to provide operating signals, for example for reading the capacitance between the movable sensing electrode 13 and the fixed sensing electrode 17. In Figure 2, the bias terminal 19 is represented for simplicity on the movable mass 12. It is understood, however, that the bias terminal 19 might be arranged on a support body of the movable mass 12 and coupled thereto through the flexures (not shown), which are conductive. A movement along the sense direction Y determines a variation in the sense gap g and therefore a corresponding capacitive variation $\Delta C$. Even more in particular, the fixed sensing electrode 17 is electrically coupled to a capacitance-to-voltage converter 14 which returns a sense signal $V_S$ of the gyroscope 11 as a function of the capacitive variation $\Delta C$, the sense signal $V_S$ therefore being indicative of the movement of the movable mass 12 along the sense direction Y.

The electronic processing unit 21, for example an ASIC, integrates a drive loop for the actuation of the movement of the movable mass 12 of the gyroscope 11 along the drive direction X. In detail, the electronic processing unit 21 comprises a drive module 15 configured to generate a drive signal $S_D$ at a drive frequency $f_0$, for example equal to 20kHz, which is applied to a drive structure 16 of the movable mass 12 of the capacitive type, as schematically represented in Figure 2. The drive structure 16 comprises for example fixed and movable interdigitated electrodes for capacitive actuation of the movable mass 12.

The electronic processing unit 21 also integrates a frequency meter 18 configured to measure and store the natural oscillation frequency of the movable mass 12 along the drive direction X, hereinafter referred to as "natural drive frequency" $f_D$, i.e. the frequency at which the movable mass 12 actually oscillates in response to the application of the drive signal $S_D$ generated by the drive module 15. In a non-limiting embodiment, the frequency meter 18 is a dedicated measurement circuit, comprising for example a synchronous counter, electrically coupled to a clock generator 31 (for example a quartz oscillator), external to the electronic processing unit 21, which provides the frequency meter 18 with the synchronism signal useful for measuring the natural drive frequency $f_D$. As explained below, the measurement of the natural drive frequency $f_D$ is useful for the purposes of the scale factor calibration method according to the present invention.

The electronic processing unit 21 is configured to receive the sense signal $V_S$ from the gyroscope 11 and to process it in order to obtain a measurement $\Omega_M$ of angular velocity at output. In detail, the sense signal $V_S$ is first converted into a digital sense signal $S_{SD}$ by an analog-to-digital converter 22. The digital sense signal $S_{SD}$ is then processed by a digital unit 23 which comprises: a calculation module 24 of a known type, for example a digital signal processor (DSP), configured to provide the measurement $\Omega_M$ of angular velocity; and a calibration module 25 which, as explained below, is configured to provide the calculation module 24 with an input useful for the purposes of correcting the scale factor of the gyroscope 11, i.e. its sensitivity.

According to one aspect of the present invention, the electronic processing unit 21 is configured to acquire the sense response of the gyroscope 11 following the application of predetermined drive conditions of the movable mass 12 useful for the purposes of calibrating the same gyroscope 11. In detail, the digital unit 23 is configured to provide the bias terminal 19 of the movable mass 12 with forcing signals $S_F$ and to measure the natural oscillation frequency of the movable mass 12 along the sense direction Y, hereinafter referred to as "natural sense frequency" $f_S$, in response to the forcing signals $S_F$. The forcing signals $S_F$ are signals variable over time and are determined by a forcing bias voltage $V_D$. Where useful for the understanding, the dependence on the forcing bias voltage $V_D$ is explicitly indicated with the symbol $S_F(V_D)$. More in detail, the digital unit 23 of the present invention, by means of the calibration module 25, provides the movable mass 12 with a sequence of forcing signals $S_F$ at different forcing bias voltages $V_{D\_i}$ and, on the basis of corresponding measurements of natural sense frequencies $f_{S\_i}$, calculates the frequency mismatch $f_M$ and estimates the sense gap g for the purposes of correcting the scale factor of the gyroscope 11, as detailed in the calibration method below.

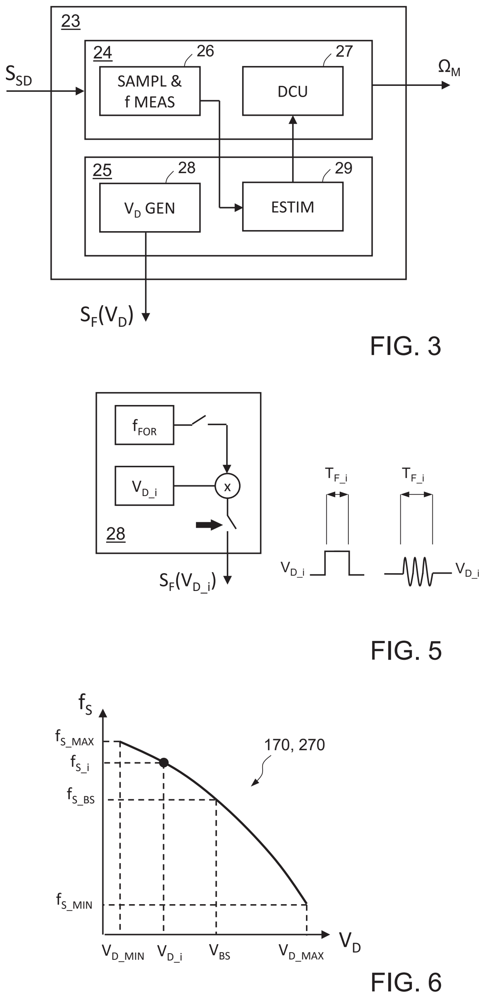

With reference to Figure 3, the calculation module 24 of the digital unit 23 comprises: a sampler 26, for sampling the digital sense signal $S_{SD}$ and for digitally measuring the natural sense frequency $f_S$; a digital compensator (or DCU) 27, for adjusting the sensitivity of the gyroscope 11; and additional digital filters (for example of the FIR - Finite Impulse Response, or IIR - Infinite Impulse Response type) for reducing the output noise (not shown in Figure 3). In detail, the sampler 26 may comprise a "zero-cross" detector capable of identifying the sign-change points of the digital sense signal $S_{SD}$, and a counter that measures the time elapsed between several consecutive sign-change points and therefore the natural sense frequency $f_S$. The zero-cross detector is for example based on a linear interpolation method, or on an interpolation by rate conversion method, such as for example one based on a SINC or Lagrange or Hermite filter.

The calibration module 25 of the digital unit 23 comprises a signal generator 28, to provide the sequence of forcing signals $S_F(V_D)$ to the bias terminal 19 of the movable mass 12, and an estimator 29. In detail, the signal generator 28 selects values of forcing bias voltage $V_D$ for the forcing signals $S_F$ in a programmed range according to the design preferences and comprising, in particular, the value of sense bias voltage $V_{BS}$. The forcing bias voltages $V_D$ are selected in a range comprised between $V_{D\_MIN}$, for example equal to 3V, and $V_{D\_MAX}$, for example equal to 18V, and the sense bias voltage $V_{BS}$ is equal, for example, to 10V. The estimator 29 is configured to: receive at input from the frequency meter 18 the measurement of natural drive frequency $f_D$ of the movable mass 12; receive at input from the sampler 26 of the calculation module 24 measurements of the natural sense frequency $f_S$ at different forcing bias voltages $V_D$; calculate the frequency mismatch $f_M$ of the gyroscope 11; and, through a fitting of electrostatic softening curves (see the detail below), perform an estimate of the sense gap g of the gyroscope 11. The estimator 29 is then configured to store and to provide the digital compensator 27 of the calculation module 24 with the calculation of the frequency mismatch $f_M$ and the estimate of the sense gap g.

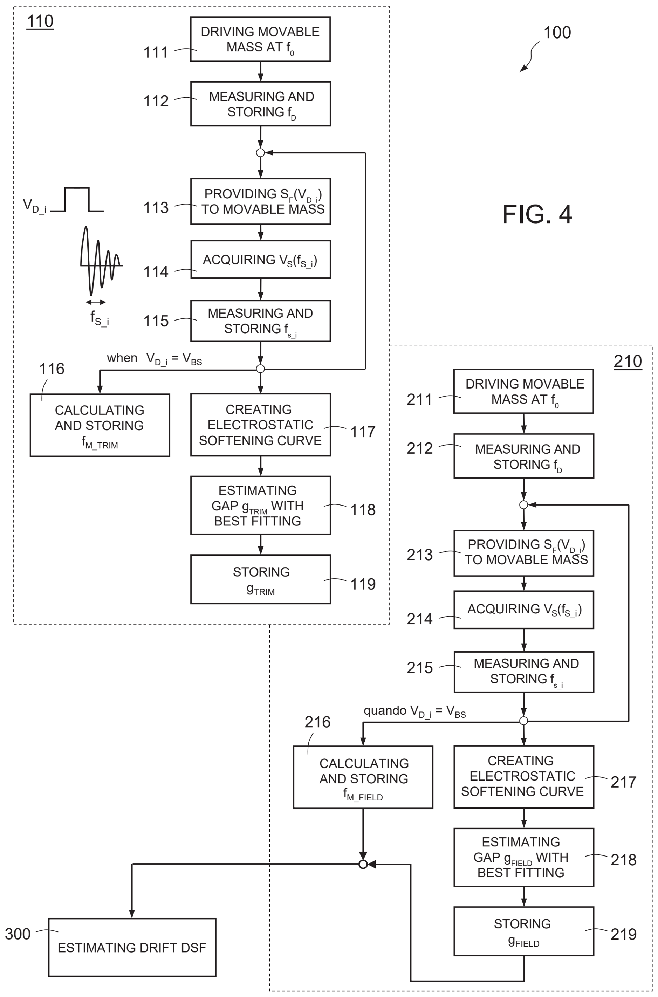

The angular velocity sense system 10 is operated according to the calibration method 100 of the scale factor of the gyroscope 11 of the present invention, as schematically represented in Figure 4. In particular, the calibration method 100 comprises a first procedure (or reference procedure) 110 wherein a reference frequency mismatch $f_{M\_TRIM}$ is calculated and wherein a reference sense gap $g_{TRIM}$ is estimated, and a second procedure (or set-up procedure) 210 wherein a set-up frequency mismatch $f_{M\_FIELD}$ is calculated and wherein a set-up sense gap $g_{FIELD}$ is estimated. A variation, or drift, of the scale factor DSF of the gyroscope 11 caused by external disturbances is then estimated by the calibration method 100 in the following manner:

$$ DSF\ [\%] = \frac{g^2_{TRIM}}{g^2_{FIELD}} \cdot \frac{f_{M\_TRIM}}{f_{M\_FIELD}} \cdot 100 \qquad\qquad (2) $$

i.e., as the product between a drift of the sense gap $\left. g^2_{TRIM} \middle/ g^2_{FIELD} \right.$ and a drift of the frequency mismatch $\left. f_{M\_TRIM} \middle/ f_{M\_FIELD} \right.$. The drift of the scale factor DSF estimated according to (2) is then used by the angular velocity sense system 10, and in particular by the digital compensator 27 of the calculation module 24, to correct the scale factor of the gyroscope 11 and, ultimately, the measurement $\Omega_M$ of angular velocity.

The first procedure 110 and the second procedure 210 of the calibration method 100 include substantially the same operations. In detail, the first procedure 110 is performed as a standard calibration procedure of the gyroscope 11; the second procedure 210 is performed in a subsequent set-up step of the gyroscope 11, for example following the assembly and/or soldering to a suitable board. Both the first and the second procedures 110, 210 are performed with the gyroscope 11 at rest (i.e. with the inertial device not subject to the Coriolis force, $\Omega$=0). For example, the first procedure 110 is performed in the factory by the manufacturer, while the second procedure 210 is performed by the installer of the gyroscope 11 (for example the customer or the same manufacturer) and may be repeated whenever it is believed that the gyroscope 11 has been subject to a thermomechanical stress condition caused by external disturbances, which may have induced a drift of the scale factor.

Again with reference to Figure 4 and without loss of generality, the steps of the first procedure 110 of the calibration method 100 are described hereinbelow; the same considerations also apply to the second procedure 210. Initially (block 111), the drive module 15 causes the movable mass 12 to oscillate in a controlled manner by applying the drive signal $S_D$ to the drive structure 16 with the drive frequency $f_0$. Then (block 112), the frequency meter 18 performs a measurement of the natural drive frequency $f_D$ of the oscillation of the movable mass 12 in response to the drive signal $S_D$ at the drive frequency $f_0$. The measurement is stored for the subsequent processings.

Subsequently (block 113), the signal generator 28 provides the movable mass 12 with a forcing signal $S_F$ defined by a signal that is variable over time superimposed on the i-th forcing bias voltage $V_{D\_i}$ of the programmed range of forcing bias voltages $V_D$, i.e. $S_F(V_{D\_i})$. In detail, the forcing signal $S_F(V_{D\_i})$ has a forcing time $T_{F\_i}$, i.e. it is a signal that may assume values different from the forcing bias voltage $V_{D\_i}$ for the forcing time $T_{F\_i}$, between a main rising edge and a main falling edge. For example, the forcing signal $S_F(V_{D\_i})$ may be a voltage step or voltage pulse signal. In more detail, the forcing signal $S_F(V_{D\_i})$ may be: a step signal with constant amplitude, between a rising edge and a falling edge, starting from the forcing bias voltage $V_{D\_i}$; a sinusoidal signal with a forcing frequency $f_{FOR}$ and an average value corresponding to the selected forcing bias voltage $V_{D\_i}$. The generation of the forcing signal $S_F$ by the signal generator 28 is shown schematically in Figure 5, wherein a controlled switch generates for example the forcing signal $S_F(V_{D\_i})$ that is a step signal.

The electronic processing unit 21 acquires (block 114) the sense response of the gyroscope 11 - in practice the sense signal $V_S$ - to the forcing signal $S_F(V_{D\_i})$. When the forcing signal $S_F(V_{D\_i})$ is removed or terminates, the sense signal $V_S$ decays with damped oscillations at a natural sense frequency $f_{S\_i}$, i.e. $V_S(f_{S\_i})$. Subsequently (block 115), the sampler 26 measures and stores the natural sense frequency $f_{S\_i}$, which depends on the i-th forcing bias voltage $V_{D\_i}$.

The forcing of the movable mass (block 113), the acquisition of the sense response of the gyroscope 11 (block 114) and the measurement of the natural sense frequency $f_{S\_i}$ (block 115) are then repeated for the remaining forcing bias voltages $V_D$ of the programmed range, comprising also the forcing bias voltage $V_D$ having a value coinciding with the value of the sense bias voltage $V_{BS}$ ($V_{D\_i} = V_{BS}$) of the fixed sensing electrode 17 of the gyroscope 11; corresponding values of natural sense frequency $f_S$ are then measured and stored, including for example $f_{S\_i}$ when $V_{D\_i}=V_{D\_MIN}$, $f_{S\_i}=f_{S\_BS}$ when $V_{D\_i}=V_{BS}$, and $f_{S\_i}$ when $V_{D\_i}=V_{D\_MAX}$.

Successively (block 116), the value of the reference frequency mismatch $f_{M\_TRIM}$ is calculated according to the following formula, using the measurement of the natural drive frequency $f_D$ of the movable mass 12 performed in block 112 and using $f_{S\_i}=f_{S\_BS}$:

$$f_{M\_TRIM} = f_{S\_BS} - f_D \qquad (3) \; .$$

The value of the reference frequency mismatch $f_{M\_TRIM}$ thus obtained is stored for subsequent processings.

Starting from the measured values of natural sense frequency $f_S$, an electrostatic softening curve 170 is created (block 117). In particular, with reference to Figure 6, the electrostatic softening curve 170 is a frequency-voltage curve and represents the values of the natural sense frequency $f_{S\_i}$ of the gyroscope 11 as a function of the corresponding forcing bias voltages $V_{D\_i}$ applied to the movable mass 12. The electrostatic softening curve for a gyroscope such as the gyroscope 11 is for example monotonically decreasing with the forcing bias voltage $V_D$, therefore when $V_{D\_i}=V_{D\_MIN}$, $f_{S\_i}=f_{S\_MAX}$ and when $V_{D\_i}=V_{D\_MAX}$, $f_{S\_i}=f_{S\_MIN}$; furthermore, Figure 6 represents the electrostatic softening curve for a single angular velocity sense axis, for example a pitch axis of the gyroscope. It is understood that for dedicated drive and sense configurations of the movable mass, curves similar to the electrostatic softening curve 170 may also be obtained for other angular velocity sense axes, for example a roll axis and/or a yaw axis of the gyroscope.

Then (block 118), there is performed a best fitting of the electrostatic softening curve 170 obtained by means of the following formula:

$$f_S(g_{TRIM}) = f_D + \frac{1}{2\pi}\sqrt{(2\pi f_{M\_TRIM})^2 - \frac{k}{g_{TRIM}^3}(V_D - V_{BS})^2} \qquad (4)$$

wherein the following are used as parameters:

- the measured natural drive frequency $f_D$ of the movable mass 12 (block 112);
- the value of the calculated reference frequency mismatch $f_{M\_TRIM}$ (block 116); and
- an electromechanical constant k, which depends on electrical and mechanical parameters of the structures of the gyroscope 11 along the sense direction Y, such as for example the dielectric constant of the materials used, the area of the electrodes, the fringing fields coefficients and the inertias.

It should be noted that formula (3) is the reduced formula of formula (4) when $V_D=V_{BS}$.

In this step, starting from formula (4) the reference sense gap $g_{TRIM}$ is estimated by solving an optimization problem; for example, the reference sense gap $g_{TRIM}$ is estimated using a least squares method:

$$\min_{g_{TRIM}} \|f_S(g_{TRIM})\|_2^2$$

The reference sense gap $g_{TRIM}$ thus estimated is finally stored (block 119) for the subsequent processings.

As anticipated, identical steps are applied to the second procedure 210 of the calibration method 100 and are indicated in the attached Figures with the block numbers of the first procedure 110 increased by 100. In particular, the value of the set-up frequency mismatch $f_{M\_FIELD}$ is obtained and stored (block 216), an electrostatic softening curve 270 for the set-up step of the gyroscope 11 is obtained (block 217) starting from measurements of the natural sense frequencies $f_S$ of the second procedure 210, and the set-up sense gap $g_{FIELD}$ is obtained and stored (blocks 218, 219). More in particular, the same sequence of forcing signals $S_F$ of the first procedure 110 is used.

Formula (2) may finally be applied in a drift estimation step (block 300) of the calibration method 100 to estimate in percentage the variation of the scale factor caused by external disturbances, using: the value of the reference frequency mismatch $f_{M\_TRIM}$ stored in the first procedure 110 (block 116); the reference sense gap $g_{TRIM}$ stored in the first procedure 110 (block 119); the value of the set-up frequency mismatch $f_{M\_FIELD}$ stored in the second procedure 210 (block 216); and the set-up sense gap $g_{FIELD}$ stored in the second procedure 210 (block 219).

The scale factor calibration method for gyroscopes of the present invention ultimately allows the sense gap and the frequency mismatch of the gyroscope to be estimated in an accurate and repeatable manner, using electrostatic softening curves. In particular, it is possible to obtain an accurate estimate of a variation of the scale factor caused by an external disturbance during the useful life of the gyroscope by using the estimates of the sense gap and the frequency mismatch, i.e. the mechanical contributions responsible for such variation, without a direct measurement of the external disturbance. The stability performances of the scale factor of the gyroscope are therefore significantly improved.

Finally, it is clear that modifications and variations may be made to what has been described and illustrated here without thereby departing from the scope of the present invention, as defined in the attached claims.

For example, the frequency meter that performs the measurement of the natural drive frequency of the gyroscope may be replaced by a microcontroller external to the gyroscope and the electronic processing unit that is capable of measuring the natural drive frequency.

It is understood that the functions of the electronic processing unit 21 that allow obtaining the sense gap, the frequency mismatch, and therefore the estimate of the variation of the scale factor, may be implemented by means of modules with different characteristics with respect to what has been described. For example, the modules of the digital unit may be different from what has been described even though they perform the same tasks, for example they may be modules belonging to digital units that are different and/or remoted from each other.

**Claims**

1. A calibration method (100) of a microelectromechanical gyroscope (11) comprising a movable mass (12), a movable sensing electrode (13) of the movable mass (12), a fixed sensing electrode (17) capacitively coupled to the movable sensing electrode (13) of the movable mass (12) and a bias terminal (19) of the movable mass (12),
the calibration method (100) comprising a first procedure (110) comprising:

   - applying, to the bias terminal (19) of the movable mass (12), a sequence of forcing signals ($S_F$), each forcing signal ($S_F$) having a forcing time ($T_F$) and being determined by a signal that is variable over time superimposed on a respective forcing bias voltage ($V_D$) selected in a range of forcing bias voltages ($V_D$);
   - acquiring a sequence of sense signals ($V_S$), each sense signal ($V_S$) being indicative of a damped oscillation of the movable mass (12) along a sense direction (Y) caused by a respective one of the forcing signals ($S_F$) consecutively to the respective forcing time ($T_F$);
   - from the sense signals ($V_S$), estimating a sequence of respective natural sense frequencies ($f_S$), each dependent on the forcing bias voltage ($V_D$) of the corresponding forcing signal ($S_F$); and
   - estimating a reference sense gap ($g_{TRIM}$), indicative of a distance at rest between the movable sensing electrode (13) of the movable mass (12) and the fixed sensing electrode (17), starting from the sequence of natural sense frequencies ($f_S$).

2. The calibration method (100) according to claim 1, further comprising:

   - causing the movable mass (12) to oscillate, along a drive direction (X) perpendicular to the sense direction (Y), at a natural drive frequency ($f_D$);
   - measuring the natural drive frequency ($f_D$); and
   - starting from the estimate of a reference natural sense frequency ($f_{S\_BS}$) of the sequence of natural sense frequencies ($f_S$) for which the corresponding forcing bias voltage ($V_D$) coincides with a sense bias voltage ($V_{BS}$) of the fixed sensing electrode (17), calculating a reference frequency mismatch ($f_{M\_TRIM}$) according to:

$$f_{M\_TRIM} = f_{S\_BS} - f_D$$

   wherein:

   - $f_{M\_TRIM}$ is the reference frequency mismatch ($f_{M\_TRIM}$);
   - $f_{S\_BS}$ is the reference natural sense frequency ($f_{S\_BS}$) estimated in the first procedure (110); and
   - $f_D$ is the natural drive frequency ($f_D$) measured in the first procedure (110).

3. The calibration method (100) according to the preceding claim, further comprising performing a best fitting of a curve (170) of the sequence of natural sense frequencies ($f_S$) against the forcing bias voltages ($V_D$) of the sequence of forcing signals ($S_F$) by means of the formula:

$$f_S(g_{TRIM}) = f_D + \frac{1}{2\pi}\sqrt{(2\pi f_{M\_TRIM})^2 - \frac{k}{g_{TRIM}^3}(V_D - V_{BS})^2}$$

wherein:

- $g_{TRIM}$ is the reference sense gap ($g_{TRIM}$);
- $f_S(g_{TRIM})$ indicates the dependence of the sequence of natural sense frequencies ($f_S$) on the reference sense gap ($g_{TRIM}$);
- k is an electromechanical constant that depends on electrical and mechanical parameters of the gyroscope (11) along the sense direction (Y);
- $V_D$ are the forcing bias voltages ($V_D$); and
- $V_{BS}$ is the sense bias voltage ($V_{BS}$) of the fixed sensing electrode (17),

and wherein estimating the reference sense gap ($g_{TRIM}$) comprises solving an optimization problem starting from said formula.

4. The calibration method (100) according to the preceding claim, wherein estimating the reference sense gap ($g_{TRIM}$) comprises employing a least squares method:

$$\min_{g_{TRIM}} \|f_S(g_{TRIM})\|_2^2$$

5. The calibration method (100) according to any of claims 2 to 4, further comprising a second procedure (210) performed subsequently to the first procedure (110) and comprising:

- applying, to the bias terminal (19) of the movable mass (12), the sequence of forcing signals ($S_F$);
- acquiring a sequence of sense signals ($V_S$), each sense signal ($V_S$) being indicative of a damped oscillation of the movable mass (12) along the sense direction (Y) caused by a respective one of the forcing signals ($S_F$) consecutively to the respective forcing time ($T_F$);
- from the sense signals ($V_S$), estimating a sequence of respective natural sense frequencies ($f_S$), each dependent on the forcing bias voltage ($V_D$) of the corresponding forcing signal ($S_F$); and
- estimating a set-up sense gap ($g_{FIELD}$), indicative of a distance at rest between the movable sensing electrode (13) of the movable mass (12) and the fixed sensing electrode (17), starting from the sequence of natural sense frequencies ($f_S$).

6. The calibration method (100) according to the preceding claim, further comprising:

- causing the movable mass (12) to oscillate along the drive direction (X) at a natural drive frequency ($f_D$);
- measuring the natural drive frequency ($f_D$); and
- starting from the estimate of a reference natural sense frequency ($f_{S\_BS}$) of the sequence of natural sense frequencies ($f_S$) for which the corresponding forcing bias voltage ($V_D$) coincides with the sense bias voltage ($V_{BS}$) of the fixed sensing electrode (17), calculating a set-up frequency mismatch ($f_{M\_FIELD}$) according to:

$$f_{M\_FIELD} = f_{S\_BS} - f_D$$

wherein:

- $f_{M\_FIELD}$ is the set-up frequency mismatch ($f_{M\_FIELD}$);
- $f_{S\_BS}$ is the reference natural sense frequency ($f_{S\_BS}$) estimated in the second procedure (210); and
- $f_D$ is the natural drive frequency ($f_D$) measured in the second procedure (210).

7. The calibration method (100) according to the preceding claim, further comprising performing a best fitting of a curve (270) of the sequence of natural sense frequencies ($f_S$) against the forcing bias voltages ($V_D$) of the sequence of forcing signals ($S_F$) by means of the formula:

$$f_S(g_{FIELD}) = f_D + \frac{1}{2\pi}\sqrt{(2\pi f_{M\_FIELD})^2 - \frac{k}{g_{FIELD}{}^3}(V_D - V_{BS})^2}$$

wherein:

- $g_{FIELD}$ is the set-up sense gap ($g_{FIELD}$);
- $f_S(g_{FIELD})$ indicates the dependence of the sequence of natural sense frequencies ($f_S$) on the set-up sense gap ($g_{FIELD}$);
- k is an electromechanical constant that depends on electrical and mechanical parameters of the gyroscope (11) along the sense direction (Y);
- $V_D$ are the forcing bias voltages ($V_D$); and
- $V_{BS}$ is the sense bias voltage ($V_{BS}$) of the fixed sensing electrode (17),

and wherein estimating the set-up sense gap ($g_{FIELD}$) comprises solving an optimization problem starting from said formula.

8. The calibration method (100) according to the preceding claim, wherein estimating the set-up sense gap ($g_{FIELD}$) comprises using a least squares method:

$$\min_{g_{FIELD}} \|f_S(g_{FIELD})\|_2^2$$

9. The calibration method (100) according to any of claims 6 to 8, further comprising estimating a variation of a scale factor (DSF) of the gyroscope (11) on the basis of the reference sense gap ($g_{TRIM}$) estimated in the first procedure (110), the set-up sense gap ($g_{FIELD}$) estimated in the second procedure (210), the reference frequency mismatch ($f_{M\_TRIM}$) calculated in the first procedure (110) and the set-up frequency mismatch ($f_{M\_FIELD}$) calculated in the second procedure (210) according to:

$$DSF\ [\%] = \frac{g_{TRIM}^2}{g_{FIELD}^2} \cdot \frac{f_{M\_TRIM}}{f_{M\_FIELD}} \cdot 100$$

and using the estimated variation of the scale factor (DSF) to correct a measurement ($\Omega_M$) of angular velocity of a rotary movement ($\Omega$) of the gyroscope (11) around a rotation direction (Z) perpendicular to the drive direction (X) and the sense direction (Y).

10. The calibration method (100) according to any of claims 5 to 9, wherein the first procedure (110) is performed in a factory calibration step of the gyroscope (11) and wherein the second procedure (210) is performed in a set-up calibration step of the gyroscope (11).

11. The calibration method (100) according to any of the preceding claims, wherein each forcing signal ($S_F$) comprises a voltage step signal, or voltage pulse signal, or a sinusoidal signal having an average value corresponding to the forcing bias voltage ($V_D$).

12. The calibration method (100) according to any of the preceding claims, wherein the gyroscope (11) is at rest during applying the sequence of forcing signals ($S_F$) and estimating the sequence of natural sense frequencies ($f_S$).

13. A system (10) for sensing angular velocity comprising a microelectromechanical gyroscope (11) and an electronic processing unit (21) coupled to the gyroscope (11),

the gyroscope (11) comprising:

- a movable mass (12);
- a movable sensing electrode (13) of the movable mass (12);
- a fixed sensing electrode (17), capacitively coupled to the movable sensing electrode (13) of the movable mass (12); and
- a bias terminal (19) of the movable mass (12),

the electronic processing unit (21) comprising:

- a signal generator (28), configured to apply, to the bias terminal (19) of the movable mass (12), a sequence of forcing signals ($S_F$), each forcing signal ($S_F$) having a forcing time ($T_F$) and being determined by a signal that is variable over time superimposed on a respective forcing bias voltage ($V_D$) selected in a range of forcing bias voltages ($V_D$);
- an analog-to-digital converter (22), configured to acquire a sequence of sense signals ($V_S$), each sense signal ($V_S$) being indicative of a damped oscillation of the movable mass (12) along a sense direction (Y) caused by a respective one of the forcing signals ($S_F$) consecutively to the respective forcing time ($T_F$);
- a sampler (26), configured to estimate a sequence of respective natural sense frequencies ($f_S$) from the sense signals ($V_S$), each natural sense frequency ($f_S$) being dependent on the forcing bias voltage ($V_D$) of the corresponding forcing signal ($S_F$); and
- an estimator (29), configured to estimate a sense gap (g), indicative of a distance at rest between the movable sensing electrode (13) of the movable mass (12) and the fixed sensing electrode (17), starting from the sequence of natural sense frequencies ($f_S$).

**14.** The system (10) according to claim 13, wherein the electronic processing unit (21) further comprises:

- a drive module (15), coupled to a drive structure (16) of the movable mass (12) of the gyroscope (11) and configured to cause the movable mass (12) to oscillate along a drive direction (X), perpendicular to the sense direction (Y), at a natural drive frequency ($f_D$); and
- a frequency meter (18), configured to measure the natural drive frequency ($f_D$) of the movable mass (12), and

wherein the estimator (29) is further configured to calculate, starting from the estimate of a reference natural sense frequency ($f_{S\_BS}$) of the sequence of natural sense frequencies ($f_S$) for which the corresponding forcing bias voltage ($V_D$) coincides with a sense bias voltage ($V_{BS}$) of the fixed sensing electrode (17), a frequency mismatch ($f_M$) according to:

$$f_M = f_{S\_BS} - f_D$$

wherein:

- $f_M$ is the frequency mismatch ($f_M$);
- $F_{S\_BS}$ is the reference natural sense frequency ($f_{S\_BS}$); and
- $f_D$ is the natural drive frequency ($f_D$).

**15.** The system (10) according to the preceding claim, wherein the estimator (29) of the electronic processing unit (21) is further configured to perform a best fitting of a curve (170, 270) of the sequence of natural sense frequencies ($f_S$) against the forcing bias voltages ($V_D$) of the sequence of forcing signals ($S_F$) by means of the formula:

$$f_S(g) = f_D + \frac{1}{2\pi}\sqrt{(2\pi f_M)^2 - \frac{k}{g^3}(V_D - V_{BS})^2}$$

wherein:

- g is the sense gap (g);
- $f_S(g)$ indicates the dependence of the sequence of natural sense frequencies ($f_S$) on the sense gap (g);
- k is an electromechanical constant that depends on electrical and mechanical parameters of the gyroscope (11) along the sense direction (Y);
- $V_D$ are the forcing bias voltages ($V_D$); and
- $V_{BS}$ is the sense bias voltage ($V_{BS}$) of the fixed sensing electrode (17),

**EP 4 737 850 A1**

and wherein the estimator (29) is configured to estimate the sense gap (g) by solving an optimization problem starting from said formula.

**16.** The system (10) according to the preceding claim, wherein the estimator (29) is configured to estimate the sense gap (g) using a least squares method:

$$\min_{g}\|f_S(g)\|_2^2$$

**17.** The system (10) according to any of claims 14 to 16, wherein the electronic processing unit (21) further comprises a digital compensator (27) configured to:

- receive at input, from the estimator (29), the estimated sense gap (g) and the calculated frequency mismatch ($f_M$);
- estimate a variation of the scale factor (DSF) of the gyroscope (11) on the basis of a variation of the sense gap (g) and a variation of the frequency mismatch ($f_M$); and
- use the estimated variation of the scale factor (DSF) to correct a measurement ($\Omega_M$) of angular velocity of a rotary movement ($\Omega$) of the gyroscope (11) around a rotation direction (Z) perpendicular to the drive direction (X) and the sense direction (Y).

**11**

FIG. 1

FIG. 2

FIG. 3

FIG. 5

FIG. 6

FIG. 4

Europäisches
Patentamt

European
Patent Office

Office européen
des brevets

## EUROPEAN SEARCH REPORT

**Application Number**

EP 25 20 9085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/187172 A1 (THOMPSON MATTHEW JULIAN [US] ET AL) 20 June 2019 (2019-06-20) | 1-8, 10-16 | INV.<br>G01C19/5755 |
| A | * paragraphs [0030], [0042] *<br>----- | 9,17 | G01C25/00 |
| A | US 10 794 702 B2 (INVENSENSE INC [US]) 6 October 2020 (2020-10-06)<br>* column 4, line 8 - line 28 *<br>----- | 1-17 | |

**TECHNICAL FIELDS SEARCHED (IPC)**

G01C
G01P

The present search report has been drawn up for all claims

| Place of search | Date of completion of the search | Examiner |
|---|---|---|
| The Hague | 20 February 2026 | Berbil Bautista, L |

EPO FORM 1503 03.82 (P04C01)

## ANNEX TO THE EUROPEAN SEARCH REPORT
## ON EUROPEAN PATENT APPLICATION NO.

EP 25 20 9085

This annex lists the patent family members relating to the patent documents cited in  the above-mentioned European search report.
The members are as contained in the European Patent Office EDP file on
The European Patent Office is in no way liable for these particulars which are merely given for the purpose of information.

20-02-2026

| Patent document cited in search report | | Publication date | Patent family member(s) | | Publication date |
|---|---|---|---|---|---|
| US 2019187172 | A1 | 20-06-2019 | NONE | | |
| US 10794702 | B2 | 06-10-2020 | CN | 111465821 A | 28-07-2020 |
| | | | EP | 3724602 A1 | 21-10-2020 |
| | | | US | 2019178645 A1 | 13-06-2019 |
| | | | WO | 2019118051 A1 | 20-06-2019 |

EPO FORM P0459